# EUROPEAN PATENT SPECIFICATION

(11) **EP 1 596 537 B1**
(45) Date of publication and mention of the grant of the patent: **09.08.2006**
(21) Application number: 04102008.2
(22) Date of filing: 10.05.2004
(51) Int. Cl.: H04L 12/56, H04Q 7/32, H04M 1/725

(54) **Proximity based searching of short-range devices**
Abstandsabhängige Suche nach Geräten mit kurzer Reichweite
Recherche de dispositif à courte portée basée sur la proximité

(43) Date of publication of application: 16.11.2005
(73) Proprietor: Research In Motion Limited, Waterloo, Ontario N2L 3W8 (CA)
(72) Inventor: Zinn, Scotte, Kitchener, Ontario N2E 3M2 (CA); Wilson, Sean, Branchton, Ontario N0B 1LO (CA)
(74) Representative: Rickard, David John

(56) References cited:
- WO-A-02/47321
- GB-A- 2 382 953
- US-B1- 6 236 868

## Description

The present invention relates generally to wireless communication devices. More particularly, it relates to short-range communication between wireless communication devices and auxiliary systems.

Wireless devices, with or without advanced data communication capabilities, are increasingly ubiquitous. Such wireless devices include data messaging devices, two-way pagers, cellular telephones, cellular telephones with data messaging capabilities, wireless Internet appliances, and data communication devices (with or without telephony capabilities). With the increasing ubiquity of such wireless devices, it becomes increasingly important to provide interoperability between these wireless devices and other electronic systems with which the wireless devices interacts.

For example, it is important that a wireless device, such as a data messaging device, be interoperable with the personal computer of the user to enable the user to operate from either the data messaging device or the personal computer, and to switch back and forth between using each device. For this to happen, the data messaging device and the personal computer should preferably automatically update the information stored on each to reflect user operations on the other device. In the case of other wireless devices, such as, for example, a cellular telephone, it is desirable that the cellular telephone be able to interact with other electronic systems, such as the audio system of an automobile. Thus, a user should preferably be able to use a cellular telephone via the microphone and speakers of the automobile, rather than the headset of the cellular telephone itself. This frees the user's hands for driving, and makes using the cellular telephone more convenient.

The interoperability of wireless devices with other electronic systems should not interfere with stand-alone functions of the wireless device, and should be as automatic as possible, such that user input is reduced to a minimum. There remains a need to increase the interoperability of wireless devices with other electronic systems while minimizing any inconvenience to the user.

[0004A] GB2382953 discloses a mobile phone which switches to an inactive state when it is located within a holder, in order to avoid inadvertent activation of features of the phone whilst within its holder. US6236868 discloses a presence sensor within a docking station for a mobile phone in order to automatically enable hands-free operation.

In accordance with a first aspect of the present invention there is provided a wireless device comprising: a short-range transceiver for communicating with an auxiliary device; a signal module for providing a mode control signal indicative of whether the auxiliary device is within close proximity; and, a control module for controllably shifting the short-range transceiver between a power saver mode and a search mode based on the mode control signal received from the signal module; wherein, when in the search mode, the short-range transceiver is operable to search for the auxiliary device to communicate therewith, and when in the power saver mode, the short-range transceiver is not operable to search for the auxiliary device.

When in the search mode, the short-range transceiver is operable to search for the auxiliary device to communicate therewith. When in the power saver mode, the short-range transceiver is not operable to search for the auxiliary device.

In accordance with a preferred embodiment of this first aspect of the invention, the signal module comprises a single-action user-input means for, in response to performance of only a single action, instructing the signal module to send a mode control to the control module.

In accordance with a further preferred embodiment of this first aspect of the invention, the signal module comprises a detector for detecting when the auxiliary device is in close proximity, the signal module being operable to send a first signal when the detector detects that the auxiliary device is in close proximity and a second signal when the detector detects that the auxiliary device is not in close proximity. The control module is operable to shift the short-range transceiver from the power saver mode to the search mode when the first signal is received from the signal module, and from the search mode to the power saver mode when the second signal is received from the signal module.

In accordance with a second aspect of the invention, there is provided a method of controlling short-range wireless communication between a wireless device and an auxiliary device, the wireless device having a detector for detecting a proximate device indicator, the method comprising providing the proximate device indicator near to the auxiliary device to indicate proximity of the auxiliary device to the wireless device, and initiating a search mode of the short-range wireless communication between the wireless device and the auxiliary device to search for the auxiliary device to communicate therewith based on the proximate device indicator indicating proximity of the auxiliary device to the wireless device, and otherwise to initiate a power saver mode wherein the search mode is not operable.

Preferably, the proximate device indicator comprises a magnet, and the detector is operable to detect the magnet.

In accordance with a third aspect of the present invention, there is provided a wireless system comprising: (a) an auxiliary device having a short-range communication module; (b) a proximate device indicator for indicating proximity of the auxiliary device, wherein the proximity device indicator is located proximate to the auxiliary device; and, (c) a wireless device. The wireless device comprises: (i) a short-range transceiver for communicating with the auxiliary device; (ii) a detector for detecting when the proximate device indicator is in close proximity; and, (iii) a control module for controllably shifting the short-range transceiver from a power saver mode to a search mode when the detector detects that the proximate device indicator is in close proximity, and for controllably shifting the short-range transceiver from a search mode to a power saver mode when the detector detects that the proximate device indicator is not in close proximity. When in the search mode, the short-range transceiver is operable to search for the short-range communication module of the auxiliary device to communicate therewith. When in the power saver mode, the short-range transceiver is not operable to search for the short-range communication module of the auxiliary device.

### Brief Description Of The Drawings

For a better understanding of the present invention, and to show more clearly how it may be carried into effect, reference will now be made, by way of example, to the accompanying drawings which aid in understanding an embodiment of the present invention and in which:

Figure 1 is a block diagram of a mobile station in accordance with an aspect of the present invention;

Figure 2 is a block diagram of a communication subsystem component of the mobile station of Figure 1;

Figure 3 is a block diagram of a node of a wireless network;

Figure 4a is a block diagram of a short-range communication subsystem of the mobile station of Figure 1;

Figure 4b is a block diagram of a first variant of a signal module of the short-range communication subsystem of Figure 4;

Figure 4c is a block diagram of a second variant of the signal module of the short-range communication subsystem of Figure 4;

Figure 5 is a block diagram of an audio system of an automobile, together with a magnet situated nearby in accordance with a further aspect of the present invention; and,

Figure 6, in a block diagram, illustrates a short-range wireless network in accordance with a still further aspect of the present invention.

### Description Of Preferred Embodiments

Aspects of the present invention make use of a mobile station. A mobile station is a two-way communication device, possibly including advanced data communication capabilities, having the capability to communicate with other computer systems. A mobile station may also include the capability for voice communications. Depending on the functionality provided by a mobile station, it may be referred to as a data messaging device, a two-way pager, a wireless e-mail device, a cellular telephone, a cellular telephone with data messaging capabilities, a wireless Internet appliance, or a data communication device (with or without telephony capabilities). A mobile station communicates with other devices through a network of transceiver stations.

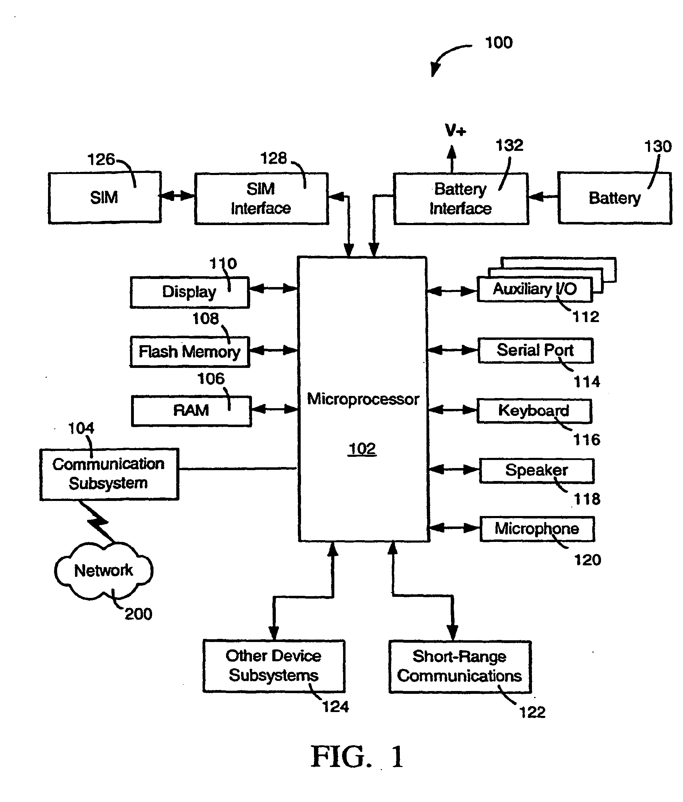

To aid the reader in understanding the structure of a mobile station and how it communicates with other devices we refer now to Figures 1 to 3.

Referring first to Figure 1, a block diagram of a mobile station is shown generally as 100. Mobile station 100 comprises a number of components, the controlling component being microprocessor 102. Microprocessor 102 controls overall operation of mobile station 100. Communication functions, including data and voice communications, are performed through communication subsystem 104. Communication subsystem 104 receives messages from and sends messages to a wireless network 200. In an embodiment of the present invention, communication subsystem 104 is configured in accordance with the Global System for Mobile Communication (GSM) and General Packet Radio Services (GPRS) standards. The GSM/GPRS wireless network is used worldwide and it is expected these standards will be superseded eventually by Enhanced Data GSM Environment (EDGE) and Universal Mobile Telecommunications Service (UMTS). New standards are still being defined, but it is believed they will have similarities to the network behaviour described herein, and it will also be understood that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile station 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile station 100 may send and receive communication signals over network 200 after required network registration or activation procedures have been completed. Network access is associated with a subscriber or user of a mobile station 100. To identify a subscriber, mobile station 100 requires a Subscriber Identity Module or "SIM" card 126 to be inserted in a SIM interface 128 in order to communicate with a network. SIM 126 is one type of a conventional "smart card" used to identify a subscriber of mobile station 100 and to personalize the mobile station 100, among other things. Without SIM 126, mobile station 100 is not fully operational for communication with network 200. By inserting SIM 126 into SIM interface 128, a subscriber can access all subscribed services. Services could include: web browsing and messaging such as email, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile station. SIM 126 may store additional subscriber information for a mobile station as well, including datebook (or calendar) information and recent call information.

Mobile station 100 is a battery-powered device and includes a battery interface 132 for receiving one or more rechargeable batteries 130. Battery interface 132 is coupled to a regulator (not shown) which assists battery 130 in providing power V+ to mobile station 100. Although current technology makes use of a battery, future technologies such as micro fuel cells may provide the power to mobile station 100.

Microprocessor 102, in addition to its operating system functions, enables execution of software applications on mobile station 100. A set of applications which control basic device operations, including data and voice communication applications will normally be installed on mobile station 100 during its manufacture. Another application that may be loaded onto mobile station 100 would be a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. In one embodiment, PIM data items are seamlessly integrated, synchronized, and updated via wireless network 200 with the mobile station subscriber's corresponding data items stored and/or associated with a host computer system. This functionality creates a mirrored host computer on mobile station 100 with respect to such items. This is especially advantageous where the host computer system is the mobile station subscriber's office computer system.

Additional applications may also be loaded onto mobile station 100 through network 200, auxiliary I/O subsystem 112, serial port 114, short-range communications subsystem 122, or any other suitable subsystem 124. This flexibility in application installation increases the functionality of mobile station 100 and may provide enhanced on-device functions, communication-related functions, or both. For example, secure communication applications may enable electronic commerce functions and other such financial transactions to be performed using mobile station 100.

Serial port 114 enables a subscriber to set preferences through an external device or software application and extends the capabilities of mobile station 100 by providing for information or software downloads to mobile station 100 other than through a wireless communication network. The alternate download path may, for example, be used to load an encryption key onto mobile station 100 through a direct and thus reliable and trusted connection to provide secure device communication.

Short-range communications subsystem 122 provides for communication between mobile station 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile station 100 is substantially similar, except that the received signals would be output to speaker 118, and signals for transmission would be generated by microphone 120. Alternative voice or audio I/O subsystems, such as a voice message recording subsystem, may also be implemented on mobile station 100. Although voice or audio signal output is accomplished primarily through speaker 118, display 110 may also be used to provide additional information such as the identity of a calling party, duration of a voice call, or other voice call related information.

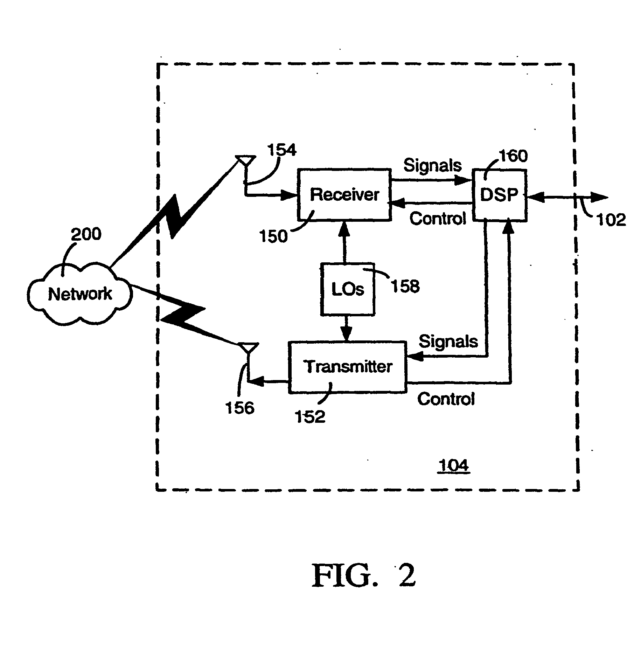

Referring now to Figure 2, a block diagram of the communication subsystem component 104 of Figure 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile station 100 is intended to operate. Thus it should be understood that the design illustrated in Figure 2 serves only as one example. Signals received by antenna 154 through network 200 are input to receiver 154, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile station 100 and a network 200 may contain one or more different channels, typically different radio frequency (RF) channels, and associated protocols used between mobile station 100 and network 200. A RF channel is a limited resource that must be conserved, typically due to limits in overall bandwidth and limited battery power of mobile station 100.

When mobile station 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

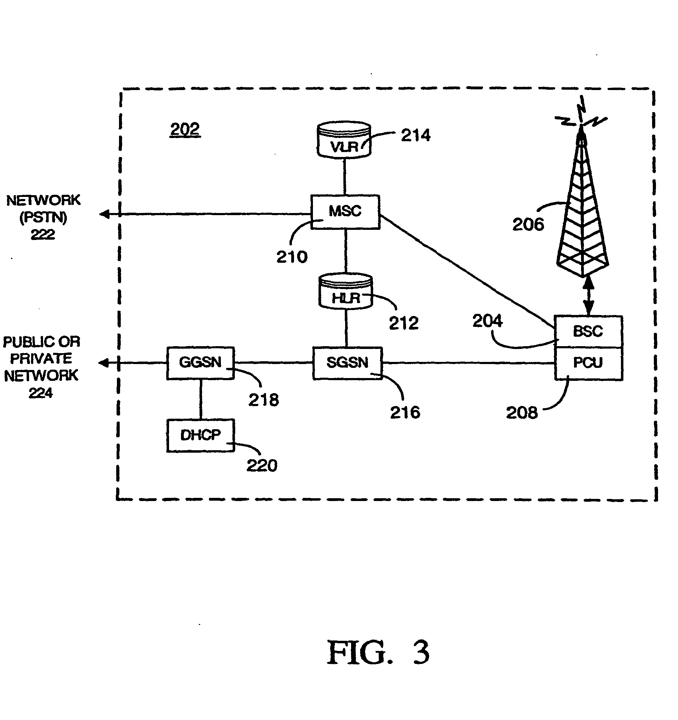

Referring now to Figure 3 a block diagram of a node of a wireless network is shown as 202. In practice, network 200 comprises one or more nodes 202. Mobile station 100 communicates with a node 202 within wireless network 200. In the embodiment of Figure 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 represents the data path for GPRS capable mobile stations. In a GSM network extended with GPRS capabilities, BSC 204 also contains a Packet Control Unit (PCU) 208 that connects to SGSN 216 to control segmentation, radio channel allocation and to satisfy packet switched requirements. To track mobile station location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile stations within its cell via station 206. The fixed transceiver equipment normally performs such functions as modulation and possibly encoding and/or encryption of signals to be transmitted to the mobile station in accordance with particular, usually predetermined, communication protocols and parameters, under control of its controller. The fixed transceiver equipment similarly demodulates and possibly decodes and decrypts, if necessary, any communication signals received from mobile station 100 within its cell. Communication protocols and parameters may vary between different nodes. For example, one node may employ a different modulation scheme and operate at different frequencies than other nodes.

For all mobile stations 100 registered with a specific network, permanent configuration data such as a user profile is stored in HLR 212. HLR 212 also contains location information for each registered mobile station and can be queried to determine the current location of a mobile station. MSC 210 is responsible for a group of location areas and stores the data of the mobile stations currently in its area of responsibility in VLR 214. Further VLR 214 also contains information on mobile stations that are visiting other networks. The information in VLR 214 includes part of the permanent mobile station data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile station 100. SGSN 216 also performs security functions and access control for data traffic on network 200. GGSN 218 provides inter networking connections with external packet switched networks and connects to one or more SGSN's 216 via an Internet Protocol (IP) backbone networked operated within the network 200. During normal operations a given mobile station 100 must perform a "GPRS Attach" to acquire an IP address and to access data services. This requirement is not present in circuit switched voice channels as ISDN addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) Server and DHCP server. Once the GPRS Attach is complete, a logical connection is established from a mobile station 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile station 100 must be assigned to one or more APN's and mobile stations 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunnelling methods such as IP over IP as in the case with some IPSecurity (IPSec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile station is not using its PDP Context, the PDP Context can be deallocated and the IP address returned to the IP address pool managed by DHCP server 220.

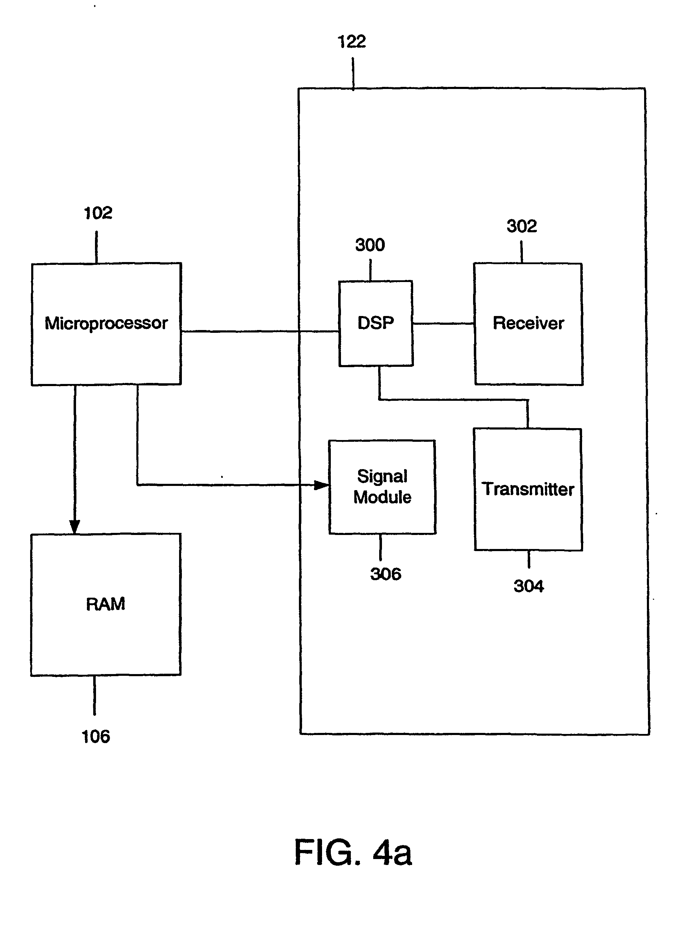

Referring to Figure 4a the short-range communication subsystem 122 of the mobile station 100 is illustrated in more detail in a block diagram. As shown, the short-range communication subsystem 122 comprises a DSP 300 linked on the one hand to microprocessor 102, and, on the other hand, to receiver 302 and transmitter 304. All of the components of short-range communication subsystem 122 are powered by battery 130 of microprocessor 102.

As described above, short-range communication subsystem 122 provides for communication between mobile station 100 and different systems or devices without the use of network 200. In some situations, this can be highly advantageous. For example, when mobile station 100 is in the vicinity of a short-range wireless network, information may be transmitted to and received by other wireless devices within this short-range wireless network using suitable protocols, such as the 802.11 family of standards developed by IEEE. This increases the bandwidth of the information that can be transmitted, and also, depending on the plan of the user of the mobile station 100, can significantly reduce user costs arising from Internet access.

However, these advantages come at a price. Specifically, keeping the short-range communication subsystem 122 active consumes power. As mobile station 100 is typically battery driven by battery 130, power is limited. Accordingly, a wireless device can typically function using the short-range communication subsystem 122 for only relatively short periods of time before battery 130 will require recharging. For this reason, it is desirable that short-range communication subsystem 122 be inactive except when circumstances exist for short-range communication.

Typically, short-range communication subsystems of wireless stations will periodically send out a signal that may be received by any transceivers operating nearby. If these nearby transceivers respond, then information can be sent from the mobile station to these transceivers via the short-range communication subsystem. However, as described above, the periodic transmission of signals from the short-range communication subsystem will consume limited power. Accordingly, it is desirable that this search by the short-range communication subsystem for nearby transceivers be curtailed unless there is some indication that such transceivers are in the vicinity.

One way of achieving this is to have the user of the mobile station indicate when wireless devices are nearby. However, this can be quite time-consuming and inconvenient. To address this problem, as shown in Figure 4a short-range communication subsystem 122 comprises a signal module 306. The signal module 306 is operable to provide a mode control signal to the microprocessor 102. Depending on the mode control signal received from the signal module 306, the microprocessor 102 is operable to switch the short-range communication subsystem 122 between a search mode, in which the short-range communication subsystem 122 searches for suitable external transceivers, and a power saver mode, in which the short-range communication subsystem 122 does not look for an external transceiver with which to communicate.

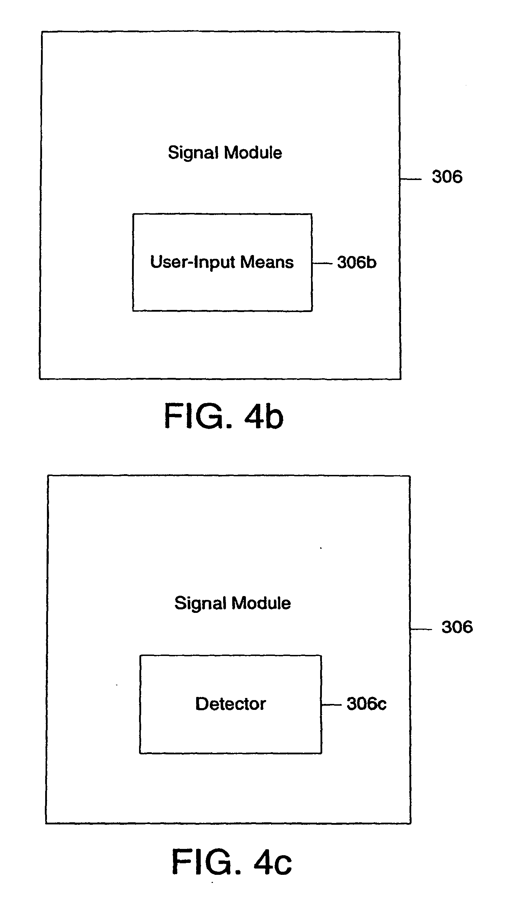

Referring to Figure 4b, there is illustrated in a block diagram a preferred variant of the signal module 306. According to this variant, the signal module 306 comprises a single-action user input means 306b. This single-action user input means 306b may be a button, or voice activated, or any other suitable device that can be operated by a single action by a user. This variant of the invention may be implemented on some conventional mobile stations using suitable software. That is, the mobile station can be configured by the software to provide an icon or other single-action user-input means 306b.

When a user of a mobile station is in close proximity to a suitable auxiliary device, the user can, by performing the designated single action, indicate this to the signal module 306 via the single-action user input means 306b. This single action might consist of simply clicking the button, or saying, for example, the word "car" or "mouse". The signal module 306 then sends a message to microprocessor 102. The microprocessor 102 then instructs receiver 302 and transmitter 304 via DSP 300 to switch to the search mode in which the short-range communication subsystem 122 searches for suitable external transceivers. Conversely, when the user does not wish the mobile station to be in the search mode, the user can, by performing the designated single action, send another message to microprocessor 102. Microprocessor 102 can then instruct short-range communication subsystem 122 to stand down in a power saver mode during which the short-range communication subsystem 122 does not look for an external receiver with which to communicate.

Referring to Figure 4c, there is illustrated in a block diagram a further preferred variant of the signal module 306 of Figure 4a. According to this embodiment, the signal module 306 comprises a detector 306c. Detector 306c is configured to detect the presence of a proximity indicator located near to an external transceiver suitable for communicating with transmitter 304 and receiver 302 of short-range communication subsystem 122. When detector 306c detects the presence of the proximity indicator, a message is sent by signal module 306 to microprocessor 102. Microprocessor 102 then switches the short-range communication subsystem 122 to the search mode in which the short-range communication subsystem 122 searches for suitable external transceivers. Optionally and conversely, when detector 306c no longer detects the presence of a proximity indicator, signal module 306 sends another signal to microprocessor 102. Microprocessor 102 then determines that a suitable external transceiver is no longer nearby, and instructs short-range communication subsystem 122 to stand down in the power saver mode during which the short-range communication subsystem 122 does not look for an external transceiver with which to communicate.

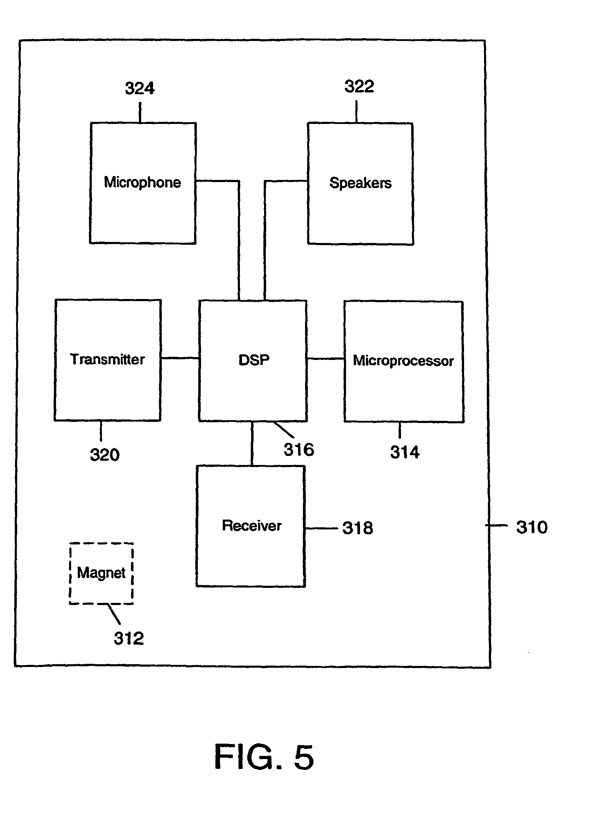

Referring to Figure 5, there is illustrated in a block diagram, an auxiliary wireless system 310 suitable for communicating with the short-range communication subsystem 122 of the mobile station 100 in accordance with a further embodiment of the invention. As described below, the auxiliary wireless system can be used via a short-range communication subsystem 122 comprising the signal module 306 of either Figures 4b or 4c. For operation with a mobile station 100 including a signal module 306 having a user-input means 306b as shown in Figure 4b, the auxiliary wireless system 310 need have no special features such as the proximity indicator located nearby. Accordingly, the description of the auxiliary wireless system 310 that follows describes the interaction of the components of the system 310 with the short-range communication subsystem 122 including the signal module 306 of Figure 4c.

As shown in Figure 5, a magnet 312 is mounted at or nearby the auxiliary system 310. The magnet 312 need not be part of the auxiliary system 310 provided the magnet 312 is near the auxiliary system 310, which relationship has been indicated by drawing the magnet 312 in dashed line. The magnet 312 is detectable by the detector 306c of the signal module 306 of Figure 4c.

The auxiliary system 310 shown in Figure 5 may be, for example, an audio system such as a car phone for an automobile. As such, auxiliary system 310 comprises a microprocessor 314 and DSP 316. DSP 316 is linked to speakers 322 and microphone 324. Auxiliary system 310 also includes a receiver 318 and a transmitter 320.

Preferably, the magnet 312 is mounted in a cradle for receiving the mobile station 100. In the case of the auxiliary system 310, the mobile station 100 may be a cellular telephone or a data communication device with telephony capabilities. When the mobile station 100 is received in the cradle, the detector 306c of the signal module 306 of Figure 4c, detects the presence of magnet 312. The signal module 306 then sends a message to microprocessor 102 indicating that the magnet 312 is present. Microprocessor 102 then instructs short-range communication subsystem 122 to shift from the power saver mode to the search mode in which a signal is sent from transmitter 304 to any nearby external receivers. This signal is received by receiver 318. Optionally, at that point, the mobile station 100 may determine, from the signal received from transmitter 320 of auxiliary system 310, a suitable BlueTooth or other profile for communicating with auxiliary system 310. Preferably, however, magnet 312 has a pre-selected configuration, which, when detected by detector 306c, and communicated by signal module 306 to microprocessor 102, enables microprocessor 102 to determine the suitable BlueTooth or other profile for communicating with auxiliary system 310. Thus, when instructing the short-range communication subsystem 122 to begin the search mode, microprocessor 102 will also instruct short-range communication subsystem 122 on the particular short-range communication profile to use.

Many different methods can be used to configure magnets so as to identify one or more communication profiles. For example, if the cradle includes only one magnet, then, perhaps, only a single communication profile is identified. However, for cradles optionally including up to two magnets, three or more communication profiles can be identified. For example, if the cradle includes a first magnet, but not a second magnet, then a first communication profile is identified. If the cradle includes a second magnet, but not the first magnet, then a second communication profile is identified. If both the first and second magnets are included in the cradle, then a third communication profile is identified. Alternatively, the location of a single magnet may change between different locations on the cradle to identify different communication profiles.

As a result of this communication between short-range communication subsystem 122 and auxiliary system 310, a user of the cell phone (mobile station 100) will be able to use the mobile station 100 via speakers 322 and microphone 324 of auxiliary system 310. That is, audio information can be communicated back and forth between the mobile station 100 and the auxiliary system 310 via short-range communication subsystem 122 and transmitter 320 and receiver 318 of auxiliary system 310.

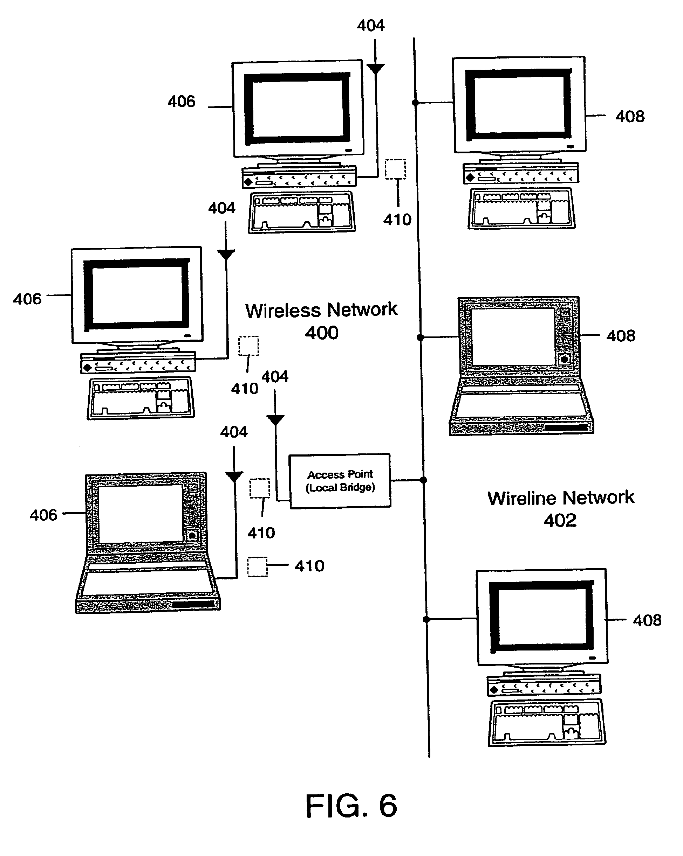

The mobile station 100 comprising the short-range communication subsystem 122 may also be employed to advantage in other contexts. For example, the auxiliary wireless system 310 may comprise a mouse that can be used with the mobile station 100 via short-range communication subsystem 122. In the case of the signal module 306 of Figure 4b, the short-range communication subsystem 122 may be switched between the power saver mode and the search mode without any automatic proximity indication means being provided near an auxiliary wireless system. However, in the case of the signal module 306 of Figure 4c, additional components may be required for the detector 306c to detect the presence of the auxiliary wireless systems. The description of Figure 6 that follows describes a wireless network that may be used without any signal module 306 of Figure 4b or the signal module 306 of Figure 4c.

Referring to Figure 6, there is illustrated in a block diagram, a wireless network 400. The wireless network 400 comprises individual computers 406, each having a transceiver 404, as well as wireline network 402 connecting wireline computers 408 with a wireline transceiver 404. In accordance with an aspect of the present invention, at least one of the transceivers 404, and preferably all of the transceivers 404, will be located near to a proximity indicator such as magnet 410. Similar to the embodiment of Figure 5, when the mobile station 100 is near to one of the magnets 410, the detector 306C of the short-range communication subsystem 122 will detect the presence of the magnet 410, and, preferably, will also detect the particular communication profile to use to communicate with wireless network 400. This profile might, for example, be a particular profile selected from the IEEE 802.11 standard. This information will be communicated to microprocessor 102 by signal module 306. Then, the microprocessor 102 of the mobile station 100 will instruct the short-range communication subsystem 122 to switch from the power saver mode to the search mode in which the short-range communication subsystem 122 sends out signals to the transceivers 404 of the wireless network 400.

Conversely, when the mobile station 100 is no longer in the vicinity of the wireless network 400, then the detector 306c will no longer detect the presence of the magnet 410. This information will be communicated to microprocessor 102, which will instruct short-range communication subsystem 122 to shift from the search mode to the power saver mode.

Other variations and modifications of the invention are possible. For example, proximity indicators other than a magnet might be used. For example, the cradle might include components that indicate to the microprocessor 102, when the mobile station 100 is inserted into the cradle, what the suitable communication profile is. One such proximity indicator could be provided by leads at the bottom of the cellular phone that are normally open circuits. Connectors carefully positioned in the cradle would close some, but not all, of these circuits, thereby indicating to the cell phone that the auxiliary devices in close proximity, and also signaling the particular communication profile to use for communication with the auxiliary device.

## Claims

1. A wireless device (100) comprising:
a short-range transceiver (302, 304) for communicating with an auxiliary device (310);
a signal module (306) for providing a mode control signal indicative of whether the auxiliary device is within close proximity; and,
a control module (102) for controllably shifting the short-range transceiver between a power saver mode and a search mode based on the mode control signal received from the signal module;
wherein, when in the search mode, the short-range transceiver is operable to search for the auxiliary device to communicate therewith, and when in the power saver mode, the short-range transceiver is not operable to search for the auxiliary device.

2. The wireless device as claimed in claim 1 wherein the signal module (306) comprises a user input means (306b) for instructing the signal module (306) to send the mode control signal to the control module (102) in response to a user input.

3. The wireless device as claimed in claim 1 or claim 2 wherein the auxiliary device (310) is a car phone.

4. The wireless device as claimed in any one of claims 1 to 3 wherein the signal module comprises a single-action user input means for, in response to performance of only a single action, instructing the signal module to send the mode control signal to the control module.

5. The wireless device as claimed in claim 4 wherein the single-action user input means comprises a button and the single action comprises clicking the button.

6. The wireless device as claimed in any one of claims 1 to 5 wherein
the signal module comprises a detector for detecting when the auxiliary device is in close proximity, the signal module being operable to send a first signal when the detector detects that the auxiliary device is in close proximity and a second signal when the detector detects that the auxiliary device is not in close proximity; and
the control module is operable to shift the short-range transceiver
from the power saver mode to the search mode when the first signal is received from the signal module, and
from the search mode to the power saver mode when the second signal is received from the signal module.

7. The wireless device as claimed in claim 6 wherein the detector is operable to detect a proximate device indicator for indicating proximity of the auxiliary device.

8. The wireless device as claimed in claim 7 wherein the device indicator comprises a magnet, and the detector is operable to detect the magnet.

9. The wireless device as claimed in claim 7 or claim 8 wherein
the control module comprises a storage module for storing at least one communication profile for communication with the auxiliary device,
the device indicator is operable to indicate and the detector is operable to detect an associated communication profile for the auxiliary device;
the signal module is operable to identify the associated communication profile in the mode control signal sent to the control module; and,
the control module is operable to select the associated communication profile for communication with the auxiliary device.

10. The wireless device as claimed in any one of claims 7 to 9 wherein the short-range transceiver is at least one of BlueTooth-enabled and 802.11 enabled.

11. The wireless device as claimed in any one of claims 7 to 10 wherein the wireless device has telephony capabilities and/or data messaging capabilities.

12. The wireless device as claimed in any of claims 7 to 11 wherein the wireless device comprises any one or a combination of a two-way pager, a wireless e-mail device, a cellular telephone with data messaging capabilities, or a wireless Internet appliance.

13. The wireless device as claimed in claim 12 wherein the auxiliary device is a mouse.

14. The wireless device as claimed in any one of claims 11 to 13 wherein the auxiliary device comprises a speaker and a microphone, wherein the telephony capabilities of the wireless device are useable via the speaker and the microphone of the auxiliary device.

15. The wireless device as claimed in any one of claims 7 to 14 wherein the proximate device indicator comprises a cradle for receiving the wireless device.

16. A method of controlling short-range wireless communication between a wireless device and an auxiliary device, the wireless device having a detector for detecting a proximate device indicator, the method comprising providing the proximate device indicator near to the auxiliary device to indicate proximity of the auxiliary device to the wireless device, and initiating a search mode of the short-range wireless communication between the wireless device and the auxiliary device to search for the auxiliary device to communicate therewith based on the proximate device indicator indicating proximity of the auxiliary device to the wireless device, and otherwise to initiate a power saver mode wherein the search mode is not operable.

17. The method as claimed in claim 16 wherein the proximate device indicator comprises a magnet, and the detector is operable to detect the magnet.

18. The method as claimed in claim 16 or claim 17 further comprising using the proximate device indicator to indicate an associated communication profile for communication with the auxiliary device.

19. The method as claimed in any one of claims 16 to 18 wherein the auxiliary device is a car phone and the wireless device has telephony capabilities such that when the car phone and the wireless device are in short-range communication, the telephony capabilities of the wireless device are useable via the car phone.

20. A wireless system comprising
(a) an auxiliary device (310) having a short-range communication module (318, 320);
(b) a proximate device indicator (312) for indicating proximity of the auxiliary device, wherein the proximate device indicator is located proximate to the auxiliary device; and
(c) a wireless device (100) as defined in any of claims 1 to 15.

## Patentansprüche

1. Drahtlose Vorrichtung (100), die Folgendes umfasst:
einen Kurzbereichssendeempfänger (302, 304) zur Kommunikation mit einer Zusatzvorrichtung (310);
ein Signalmodul (306) zur Bereitstellung eines Modussteuersignals, das anzeigt, ob sich die Zusatzvorrichtung in nächster Nähe befindet; und
ein Steuermodul (102) zum steuerbaren Umschalten des Kurzbereichssendeempfängers von einem Stromsparmodus in einen Suchmodus und umgekehrt, basierend auf dem Modussteuersignal, das von dem Signalmodul empfangen wurde;
wobei der Kurzbereichssendeempfänger im Suchmodus so betrieben werden kann, dass er die Zusatzvorrichtung sucht, um damit zu kommunizieren, und der Kurzbereichssendeempfänger im Stromsparmodus nicht so betrieben werden kann, dass er die Zusatzvorrichtung sucht.

2. Drahtlose Vorrichtung nach Anspruch 1, wobei das Signalmodul (306) ein Benutzereingabemittel (306b) umfasst, um das Signalmodul (306) anzuweisen, das Modussteuersignal als Reaktion auf eine Benutzereingabe zum Steuermodul (102) zu senden.

3. Drahtlose Vorrichtung nach Anspruch 1 oder Anspruch 2, wobei die Zusatzvorrichtung (310) ein Autotelefon ist.

4. Drahtlose Vorrichtung nach einem der Ansprüche 1 bis 3, wobei das Signalmodul ein einfachwirkendes Benutzereingabemittel umfasst, das als Reaktion auf die Ausführung nur einer einzelnen Handlung das Signalmodul anweist, das Modussteuersignal zum Steuermodul zu senden.

5. Drahtlose Vorrichtung nach Anspruch 4, wobei das einfachwirkende Benutzereingabemittel eine Schaltfläche ist und die einzelne Handlung das Klicken der Schaltfläche umfasst.

6. Drahtlose Vorrichtung nach einem der Ansprüche 1 bis 5, wobei
das Signalmodul einen Detektor umfasst, der erfasst, wenn sich die Zusatzvorrichtung in nächster Nähe befindet, wobei das Signalmodul so betrieben werden kann, dass es ein erstes Signal sendet, wenn der Detektor erfasst, dass sich die Zusatzvorrichtung in nächster Nähe befindet, und ein zweites Signal sendet, wenn der Detektor erfasst, dass sich die Zusatzvorrichtung nicht in nächster Nähe befindet; und
das Steuermodul so betrieben werden kann, dass es den Kurzbereichssendeempfänger
vom Stromsparmodus in den Suchmodus umschaltet, wenn das erste Signal von dem Signalmodul empfangen wird, und
vom Suchmodus in den Stromsparmodus umschaltet, wenn das zweite Signal von dem Signalmodul empfangen wird.

7. Drahtlose Vorrichtung nach Anspruch 6, wobei der Detektor so betrieben werden kann, dass er ein Anzeigemittel für eine benachbarte Vorrichtung erfasst, das die Nähe der Zusatzvorrichtung anzeigt.

8. Drahtlose Vorrichtung nach Anspruch 7, wobei das Vorrichtungsanzeigemittel einen Magneten umfasst und der Detektor so betrieben werden kann, dass er den Magneten erfasst.

9. Drahtlose Vorrichtung nach Anspruch 7 oder Anspruch 8, wobei
das Steuermodul ein Speichermodul zum Speichern mindestens eines Kommunikationsprofils zur Kommunikation mit der Zusatzvorrichtung umfasst,
das Vorrichtungsanzeigemittel so betrieben werden kann, dass es eine Anzeige bereitstellt, und der Detektor so betrieben werden kann, dass er ein zugehöriges Kommunikationsprofil für die Zusatzvorrichtung erfasst;
das Signalmodul so betrieben werden kann, dass es das zugehörige Kommunikationsprofil in dem Modussteuersignal, das zum Steuermodul gesendet wurde, identifiziert; und
das Steuermodul so betrieben werden kann, dass es das zugehörige Kommunikationsprofil zur Kommunikation mit der Zusatzvorrichtung auswählt.

10. Drahtlose Vorrichtung nach einem der Ansprüche 7 bis 9, wobei der Kurzbereichssendeempfänger mindestens BlueTooth-aktiviert oder 802.11-aktiviert ist.

11. Drahtlose Vorrichtung nach einem der Ansprüche 7 bis 10, wobei die drahtlose Vorrichtung Telefoniefähigkeiten und/oder Datenmitteilungsfähigkeiten aufweist.

12. Drahtlose Vorrichtung nach einem der Ansprüche 7 bis 11, wobei die drahtlose Vorrichtung ein Zwei-Weg-Personenrufgerät, ein drahtloses E-Mail-Gerät, ein Mobiltelefon mit Datenmitteilungsfähigkeiten oder ein drahtloses Internetgerät oder Kombinationen davon umfasst.

13. Drahtlose Vorrichtung nach Anspruch 12, wobei die Zusatzvorrichtung eine Maus ist.

14. Drahtlose Vorrichtung nach einem der Ansprüche 11 bis 13, wobei die Zusatzvorrichtung einen Lautsprecher und ein Mikrofon umfasst, wobei die Telefoniefähigkeiten der drahtlosen Vorrichtung über den Lautsprecher und das Mikrofon der Zusatzvorrichtung verwendet werden können.

15. Drahtlose Vorrichtung nach einem der Ansprüche 7 bis 14, wobei das Anzeigemittel für eine benachbarte Vorrichtung eine Ladestation zur Aufnahme der drahtlosen Vorrichtung umfasst.

16. Verfahren zur Steuerung der drahtlosen Kurzbereichskommunikation zwischen einer drahtlosen Vorrichtung und einer Zusatzvorrichtung, wobei die drahtlose Vorrichtung einen Detektor zum Erfassen eines Anzeigemittels für eine benachbarte Vorrichtung aufweist und das Verfahren Folgendes umfasst: Bereitstellen des Anzeigemittels für eine benachbarte Vorrichtung in der Nähe der Zusatzvorrichtung, um der drahtlosen Vorrichtung die Nähe der Zusatzvorrichtung anzuzeigen, Initiieren eines Suchmodus der drahtlosen Kurzbereichskommunikation zwischen der drahtlosen Vorrichtung und der Zusatzvorrichtung, um die Zusatzvorrichtung zu suchen und damit basierend darauf zu kommunizieren, dass das Anzeigemittel für eine benachbarte Vorrichtung der drahtlosen Vorrichtung die Nähe der Zusatzvorrichtung anzeigt, und andernfalls Initiieren eines Stromsparmodus, bei dem der Suchmodus nicht betrieben werden kann.

17. Verfahren nach Anspruch 16, wobei das Anzeigemittel für eine benachbarte Vorrichtung einen Magneten umfasst und der Detektor so betrieben werden kann, dass er den Magneten erfasst.

18. Verfahren nach Anspruch 16 oder Anspruch 17, das des Weiteren die Verwendung des Anzeigemittels für eine benachbarte Vorrichtung umfasst, um ein zugehöriges Kommunikationsprofil zur Kommunikation mit der Zusatzvorrichtung anzuzeigen.

19. Verfahren nach einem der Ansprüche 16 bis 18, wobei die Zusatzvorrichtung ein Autotelefon ist und die drahtlose Vorrichtung Telefoniefähigkeiten aufweist, so dass die Telefoniefähigkeiten der drahtlosen Vorrichtung über das Autotelefon nutzbar sind, wenn das Autotelefon und die drahtlose Vorrichtung in Kurzbereichskommunikation stehen.

20. Drahtloses System, das Folgendes umfasst:
(a) eine Zusatzvorrichtung (310), die ein Kurzbereichskommunikationsmodul (318, 320) aufweist;
(b) ein Anzeigemittel für eine benachbarte Vorrichtung (312) zur Anzeige der Nähe der Zusatzvorrichtung, wobei das Anzeigemittel für eine benachbarte Vorrichtung benachbart zur Zusatzvorrichtung angeordnet ist; und
(c) eine drahtlose Vorrichtung (100) nach einem der Ansprüche 1 bis 15.

## Revendications

1. Dispositif sans fil (100) comprenant:
un émetteur-récepteur à courte distance (302, 304) pour communiquer avec un dispositif auxiliaire (310);
un module de signal (306) pour fournir un signal de contrôle de mode indiquant si le dispositif auxiliaire est dans un voisinage proche; et,
un module de contrôle (102) pour basculer de façon contrôlable l'émetteur-récepteur à courte distance entre un mode d'économie d'énergie et un mode de recherche en fonction du signal de contrôle de mode reçu en provenance du module de signal;
dans lequel, dans le mode de recherche, l'émetteur-récepteur à courte distance peut fonctionner pour rechercher le dispositif auxiliaire pour communiquer avec celui-ci, et dans le mode d'économie d'énergie, l'émetteur-récepteur à courte distance ne peut pas fonctionner pour rechercher le dispositif auxiliaire.

2. Dispositif sans fil tel que revendiqué dans la revendication 1 dans lequel le module de signal (306) comprend un moyen d'entrée (306b) pour utilisateur pour donner l'instruction au module de signal (306) d'émettre le signal de contrôle de mode pour contrôler le module (102) en réponse à l'entrée faite par un utilisateur.

3. Dispositif sans fil tel que revendiqué dans la revendication 1 ou dans la revendication 2 dans lequel le dispositif auxiliaire (310) est un téléphone de voiture.

4. Dispositif sans fil tel que revendiqué dans l'une quelconque des revendications 1 à 3 dans lequel le module de signal comprend un moyen d'entrée à action unique pour utilisateur pour, en réponse à la seule réalisation d'une action unique, donner l'instruction au module de signal d'envoyer le signal de contrôle de mode au module de contrôle.

5. Dispositif sans fil tel que revendiqué dans la revendication 4 dans lequel le moyen d'entrée à action unique pour utilisateur comprend un bouton et l'action unique comprend le fait de cliquer sur le bouton.

6. Dispositif sans fil tel que revendiqué dans l'une quelconque des revendications 1 à 5 dans lequel
le module de signal comprend un détecteur pour détecter quand le dispositif auxiliaire est dans un voisinage proche, le module de signal pouvant fonctionner pour envoyer un premier signal quand le détecteur détecte que le dispositif auxiliaire se trouve dans un voisinage proche et un second signal lorsque le détecteur détecte que le dispositif auxiliaire ne se trouve pas dans un voisinage proche; et
le module de contrôle peut fonctionner pour basculer l'émetteur-récepteur à courte distance
du mode d'économie d'énergie au mode de recherche lorsque le premier signal est reçu en provenance du module de signal, et
du mode de recherche au mode d'économie d'énergie lorsque le second signal est reçu en provenance du module de signal.

7. Dispositif sans fil tel que revendiqué dans la revendication 6 dans lequel le détecteur peut fonctionner pour détecter un dispositif indicateur de proximité pour indiquer la proximité du dispositif auxiliaire.

8. Dispositif sans fil tel que revendiqué dans la revendication 7 dans lequel l'indicateur de dispositif comprend un aimant, et le détecteur peur fonctionner pour détecter l'aimant.

9. Dispositif sans fil tel que revendiqué dans la revendication 7 ou dans la revendication 8 dans lequel
le module de contrôle comprend un module de stockage pour stocker au moins un profil de communication pour communiquer avec le dispositif auxiliaire,
l'indicateur de dispositif peut fonctionner pour indiquer et le détecteur peut fonctionner pour détecter un profil de communication associé pour le dispositif auxiliaire;
le module de signal peut fonctionner pour identifier le profil de communication associé dans le signal de contrôle de mode envoyé au module de contrôle; et,
le module de contrôle peut fonctionner pour sélectionner le profil de communication associé pour communiquer avec le dispositif auxiliaire.

10. Dispositif sans fil tel que revendiqué dans l'une quelconque des revendications 7 à 9 dans lequel l'émetteur-récepteur à faible portée est au moins compatible BlueTooth ou au moins compatible 802.11.

11. Dispositif sans fil tel que revendiqué dans l'une quelconque des revendications 7 à 10 dans lequel le dispositif sans fil présente des fonctions de téléphonie et/ou de messagerie de données.

12. Dispositif sans fil tel que revendiqué dans l'une quelconque des revendications 7 à 11 dans lequel le dispositif sans fil comprend l'un quelconque ou une combinaison des éléments suivants : une radiomessagerie bidirectionnelle, un dispositif sans fil pour courrier électronique, un téléphone cellulaire à fonctions de messagerie de données, ou un appareil sans fil d'accès à l'Internet.

13. Dispositif sans fil tel que revendiqué dans la revendication 12 dans lequel le dispositif auxiliaire est une souris.

14. Dispositif sans fil tel que revendiqué dans l'une quelconque des revendications 11 à 13 dans lequel le dispositif auxiliaire comprend un haut-parleur et un microphone, dans lequel les fonctions de téléphonie du dispositif sans fil sont exploitables au moyen du haut-parleur et du microphone du dispositif auxiliaire.

15. Dispositif sans fil tel que revendiqué dans l'une quelconque des revendications 7 à 14 dans lequel l'indicateur de proximité de dispositif comprend un berceau pour recevoir le dispositif sans fil.

16. Procédé de contrôle de communication sans fil à faible portée entre un dispositif sans fil et un dispositif auxiliaire, le dispositif sans fil ayant un détecteur pour détecter un indicateur de proximité de dispositif, le procédé comprenant l'apport de l'indicateur de proximité de dispositif au voisinage du dispositif auxiliaire pour indiquer la proximité du dispositif auxiliaire au dispositif sans fil, et le lancement d'un mode de recherche de la communication sans fil à faible portée entre le dispositif sans fil et le dispositif auxiliaire pour rechercher le dispositif auxiliaire pour communiquer avec celui-ci en fonction de l'indication de proximité du dispositif auxiliaire fournie par l'indicateur de proximité de dispositif au dispositif sans fil, et autrement de lancer un mode d'économie d'énergie dans lequel le mode de recherche ne peut pas fonctionner.

17. Procédé tel que revendiqué dans la revendication 16 dans lequel l'indicateur de proximité de dispositif comprend un aimant, et le détecteur peut fonctionner pour détecter l'aimant.

18. Procédé tel que revendiqué dans la revendication 16 ou dans la revendication 17 comprenant en outre l'utilisation de l'indicateur de proximité de dispositif pour indiquer un profil de communication associé pour communiquer avec le dispositif auxiliaire.

19. Procédé tel que revendiqué dans l'une quelconque des revendications 16 à 18 dans lequel le dispositif auxiliaire est un téléphone de voiture et le dispositif sans fil possède des fonctions de téléphonie telles que lorsque le téléphone de voiture et le dispositif sans fil sont en communication à faible portée, les fonctions de téléphonie du dispositif sans fil sont exploitables via le téléphone de voiture.

20. Système sans fil comprenant
(a) un dispositif auxiliaire (310) ayant un module de communication à faible portée (318, 320);
(b) un indicateur de proximité de dispositif (312) pour indiquer la proximité du dispositif auxiliaire, dans lequel l'indicateur de proximité de dispositif est situé dans le voisinage du dispositif auxiliaire; et
(c) un dispositif sans fil (100) tel que défini dans l'une quelconque des revendications 1 à 15.
